# EUROPEAN PATENT SPECIFICATION

(11) **EP 4 362 653 B1**
(45) Date of publication and mention of the grant of the patent: **25.02.2026**
(21) Application number: 22748146.2
(22) Date of filing: 30.06.2022
(51) Int. Cl.: A01B 63/00, A01D 41/14

(54) **SYSTEMS AND METHODS FOR CONTROLLING THE HEIGHT OF A HARVESTING IMPLEMENT RELATIVE TO THE GROUND**
SYSTEME UND VERFAHREN ZUR STEUERUNG DER HÖHE EINES ERNTEGERÄTS IN BEZUG AUF DEN BODEN
SYSTÈMES ET PROCÉDÉS DE COMMANDE DE LA HAUTEUR D'UN OUTIL DE RÉCOLTE PAR RAPPORT AU SOL

(30) Priority: 30.06.2021 US 202163216748 P
(43) Date of publication of application: 08.05.2024
(73) Proprietor: CNH Industrial Belgium NV, 8210 Zedelgem (BE)
(72) Inventor: LAUWERYS, Christophe, 8210 8210 Zedelgem (BE); HUNT, Cory Douglas, New Holland, Pennsylvania 17557 (US); MISSOTTEN, Bart M.A., 8210 Zedelgem (BE); MARTIN, Jethro, New Holland, Pennsylvania 17557 (US); LENAERTS, Bart, 8210 Zedelgem (BE)
(74) Representative: CNH Industrial IP Department
(86) International application number: PCT/US2022/035662
(87) International publication number: WO 2023/278658

(56) References cited:
- WO-A1-2015/143550
- CN-A- 110 447 394
- US-A1- 2018 122 020
- US-A1- 2020 163 277
- US-B2- 9 980 431

## Description

### FIELD OF THE INVENTION

The present subject matter relates generally to harvesting implements for agricultural vehicles, and, more particularly, to systems and methods for controlling the height of a harvesting implement relative to a ground surface.

### BACKGROUND OF THE INVENTION

A harvester is an agricultural machine that is used to harvest and process crops. For instance, a forage harvester may be used to cut and comminute silage crops, such as grass and corn. Similarly, a combine harvester may be used to harvest grain crops, such as wheat, oats, rye, barely, corn, soybeans, and flax or linseed. In general, the objective is to complete several processes, which traditionally were distinct, in one pass of the machine over a particular part of the field. In this regard, most harvesters are equipped with a detachable harvesting implement, such as a header, which cuts and collects the crop from the field and feeds it to the base harvester for further processing.

Conventionally, the operation of most harvesters requires substantial operational involvement and control by the operator. For example, with reference to a combine, the operator is typically required to control various operating parameters, such as the direction of the combine, the speed of the combine, the height and tilt of the combine header, the air flow through the combine cleaning fan, the amount of harvested crop stored on the combine, and/or the like. To address such issues, many current combines utilize an automatic header height control system that attempts to maintain a constant cutting height above the ground regardless of the ground contour or ground position relative to the base combine. For instance, it is known to utilize electronically controlled height and tilt cylinders to automatically adjust the height and lateral orientation, or tilt, of the header relative to the ground based on sensor measurements received from a plurality of sensors mounted on the header. These header-based sensor arrangements typically rely on detecting a distance between each sensor and the ground surface for subsequent use as the basis for header height control. However, the position of the header, itself, (and, thus, any sensors coupled thereto) is constantly changing relative to the ground surface as, for example, the wheels of the harvester encounter terrain variations. As a result, variations in the distance measurements provided by the header-based sensors are due to changes in the position of the header relative to the ground surface as opposed to actual changes in the profile of the ground surface, thereby leading to issues with accurately maintaining a desired header height.

Accordingly, improved systems and methods for controlling the height of a harvesting implement relative to the ground that addresses one or more of the issues in the prior art would be welcomed in the technology.

### BRIEF DESCRIPTION OF THE INVENTION

Aspects and advantages of the invention will be set forth in part in the following description, or may be obvious from the description, or may be learned through practice of the invention.

The invention provides a height control system for an agricultural vehicle according to claim 1 and a method for automatically controlling a height of a harvesting implement of an agricultural work vehicle relative to a ground surface according to claim 10. Preferred embodiments are provided in the dependent claims.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a simplified, partial sectional side view of one embodiment of an agricultural harvester in accordance with aspects of the present subject matter;
FIG. 2 illustrates a simplified, schematic view of one embodiment of a harvesting implement for an agricultural harvester in accordance with aspects of the present subject matter, particularly illustrating sensor-related components installed relative to the harvesting implement;
FIG. 3 illustrates another simplified, schematic view of the harvesting implement and sensor-related components shown in FIG. 2, particularly illustrating a representation of an example terrain map that can be generated in accordance with aspects of the present subject matter;
FIG. 4 illustrates a schematic view of one embodiment of a system for controlling the height of an agricultural implement relative to the ground in accordance with aspects of the present subject matter;
FIG. 5 illustrates a flow diagram of one embodiment of control logic that may be utilized by the control system shown in FIG. 4 in order to maintain a harvesting implement of an agricultural vehicle at a desired height relative to the ground in accordance with aspects of the present subject matter; and
FIG. 6 illustrates a flow diagram of one embodiment of a method for controlling the height of a harvesting implement relative to the ground in accordance with aspects of the present subject matter.

### DETAILED DESCRIPTION OF THE INVENTION

Reference now will be made in detail to embodiments of the invention, one or more examples of which are illustrated in the drawings. Each example is provided by way of explanation of the invention, not limitation of the invention.

In general, the present subject matter is directed to systems and methods for controlling the height of a harvesting implement relative to a ground surface. Specifically, in several embodiments, the disclosed system includes one or more distance sensors supported relative to a harvesting implement, with the distance sensor(s) being configured to detect a distance between the sensor(s) and one or more points along the ground surface at a location(s) forward of the harvesting implement. Additionally, the system includes one or more sensor positioning assemblies for generating pose data associated with a position and angular orientation of the distance sensor(s). In several embodiments, each sensor positioning assembly may include both a first pose measurement device for generating pose data associated with an absolute pose of the distance sensor(s) relative to a world coordinate system and a second pose measurement device for generating pose data associated with a relative pose of the sensor(s).

In accordance with aspects of the present subject matter, the pose data provided by the sensor positioning assembly may be used to calculate a distance compensation value that can be applied to the distance measurements provided by the distance sensor(s) to generate a more accurate profile/map of the ground surface. Specifically, in embodiments in which the distance sensor(s) is supported on the harvesting implement, the sensor(s) will move relative to the ground surface with, for example, movement of the implement together with the harvester's chassis (e.g., when the chassis shifts up/down as the wheels encounter terrain variations along the ground surface). As a result, with such movement of the distance sensor(s), variations in the distance detected by the sensor(s) are not necessarily due to variations in the ground profile itself, but rather are often due to changes in the pose of the sensor(s) relative to the ground surface. Accordingly, the pose data provided by the sensor positioning assembly may be used to correct the distance data to compensate for movement of the distance sensor(s) within a world or global frame of reference, thereby providing compensated distance data that is indicative of an absolute profile of the ground surface. The estimated ground profile (e.g., as determined via the compensated distance data) may then, for example, be used to actively control the height of the harvesting implement and/or to generate a terrain map of the field in which the harvester is operating.

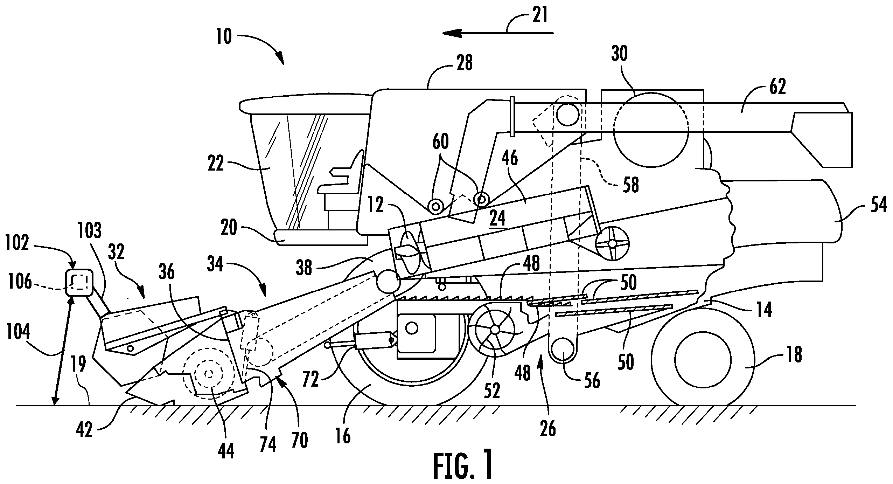

Referring now to the drawings, FIG. 1 illustrates a simplified, partial sectional side view of one embodiment of a work vehicle, such as an agricultural harvester 10. The harvester 10 may be configured as an axial-flow type combine, wherein crop material is threshed and separated while it is advanced by and along a longitudinally arranged rotor 12. The harvester 10 may include a chassis or main frame 14 having a pair of driven, ground-engaging front wheels 16 and a pair of steerable rear wheels 18. The wheels 16, 18 may be configured to support the harvester 10 relative to a ground surface 19 and move the harvester 10 in a forward direction of movement (indicated by arrow 21 in FIG. 1) relative to the ground surface 19. Additionally, an operator's platform 20 with an operator's cab 22, a threshing and separating assembly 24, a grain cleaning assembly 26 and a holding tank 28 may be supported by the frame 14. As is generally understood, the harvester 10 may include an engine and a transmission mounted on the frame 14. The transmission may be operably coupled to the engine and may provide variably adjusted gear ratios for transferring engine power to the wheels 16, 18 via a drive axle assembly (or via axles if multiple drive axles are employed).

Moreover, as shown in FIG. 1, a harvesting implement (e.g., a header 32) and an associated feeder 34 may extend forward of the main frame 14 and may be pivotally secured thereto for generally vertical movement. In general, the feeder 34 may be configured to serve as support structure for the header 32. As shown in FIG. 1, the feeder 34 may extend between a front end 36 coupled to the header 32 and a rear end 38 positioned adjacent to the threshing and separating assembly 24. As is generally understood, the rear end 38 of the feeder 34 may be pivotally coupled to a portion of the harvester 10 to allow the front end 36 of the feeder 34 and, thus, the header 32 to be moved upwardly and downwardly relative to the ground 19 to set the desired harvesting or cutting height for the header 32.

As the harvester 10 is propelled forwardly over a field with standing crop, the crop material is severed from the stubble by a sickle bar 42 at the front of the header 32 and delivered by a header auger 44 to the front end 36 of the feeder 34, which supplies the cut crop to the threshing and separating assembly 24. As is generally understood, the threshing and separating assembly 24 may include a cylindrical chamber 46 in which the rotor 12 is rotated to thresh and separate the crop received therein. That is, the crop is rubbed and beaten between the rotor 12 and the inner surfaces of the chamber 46, whereby the grain, seed, or the like, is loosened and separated from the straw.

Crop material which has been separated by the threshing and separating assembly 24 falls onto a series of pans 48 and associated sieves 50, with the separated crop material being spread out via oscillation of the pans 48 and/or sieves 50 and eventually falling through apertures defined in the sieves 50. Additionally, a cleaning fan 52 may be positioned adjacent to one or more of the sieves 50 to provide an air flow through the sieves 50 that removes chaff and other impurities from the crop material. For instance, the fan 52 may blow the impurities off of the crop material for discharge from the harvester 10 through the outlet of a straw hood 54 positioned at the back end of the harvester 10.

The cleaned crop material passing through the sieves 50 may then fall into a trough of an auger 56, which may be configured to transfer the crop material to an elevator 58 for delivery to the associated holding tank 28. Additionally, a pair of tank augers 60 at the bottom of the holding tank 28 may be used to urge the cleaned crop material sideways to an unloading tube 62 for discharge from the harvester 10.

Moreover, in several embodiments, the harvester 10 may also include a hydraulic system 70 which is configured to adjust a height of the header 32 relative to the ground surface 19 so as to maintain the desired cutting height between the header 32 and the ground surface 19. The hydraulic system 70 may include a height actuator 72 (e.g., a fluid-actuated cylinder) configured to adjust the height or vertical positioning of the header 32 relative to the ground. For example, in some embodiments, the height actuator 72 may be coupled between the feeder 34 and the frame 14 such that the height actuator 72 may pivot the feeder 34 to raise and lower the header 32 relative to the ground 19. In addition, the hydraulic system 70 may include a tilt actuator(s) 74 (e.g., a fluid-actuated cylinder) coupled between the header 32 and the feeder 34 to allow the header 32 to be tilted relative to the ground surface 19 or pivoted laterally or side-to-side relative to the feeder 34.

Additionally, in accordance with aspects of the present subject matter, the harvester 10 may include one or more distance sensors 102 (one of which is shown in FIG. 1) supported relative to the header 32, such as by being supported on the header 32 (e.g., via a mounting arm 103). In general, the distance sensor(s) 102 may be configured to detect a distance 104 between the sensor(s) 102 and one or more points along the ground surface 19 at a location(s) forward of the header 32 in the direction of travel 21. For instance, the distance sensor(s) 102 may, in one embodiment, have a field of view(s) directed towards the ground surface 19 out in front of the header 32 such that the sensor(s) 102 is configured to detect the distance 104 between the sensor(s) 102 and the ground surface 19 along a lateral swath(s) of the ground surface 19 extending horizontal and perpendicular to the direction of travel 21 (e.g., in the direction in-and-out of the page relative to the view shown in FIG. 1). In such an embodiment, as will be described below, the distance data provided by the distance sensor(s) 102 may be used to generate an estimated ground profile section along the lateral swath(s) of the ground surface 19 detected by the sensor(s) 102. By continuously detecting such sensor-to-ground distances 104 as the harvester 10 is moved across the field, the various ground profile sections created based on the distance data may be used to generate a terrain map for the field that can be used for providing closed-loop control of the header height to account for anticipated movement of the chassis 14 (and, thus, the header 32 coupled thereto) due to the wheels 16, 18 of the harvester 10 encountering mapped terrain variations.

In general, the distance sensor(s) 102 may correspond to any suitable sensor device or assembly that is capable of detecting the distance 104 between the sensor(s) 102 and the ground surface 19. In several embodiments, the distance sensor(s) 102 may correspond to one or more non-contact sensors. For instance, in one embodiment, the distance sensor(s) 102 may correspond to one or more radar devices. In another embodiment, the distance sensor(s) 102 may correspond to one or more light detection and ranging (LIDAR) devices and/or one or more imaging devices (e.g., one or more cameras, such as stereo cameras). In other embodiments, the distance sensor(s) 102 may correspond to any other suitable non-contact-based sensor devices and/or assemblies (e.g., ultrasound sensors) or any suitable contact-based sensor devices and/or assemblies. Additionally, in one embodiment, the distance sensor(s) 102 may include a combination of different sensor types, such as a combination of radar devices and LIDAR devices.

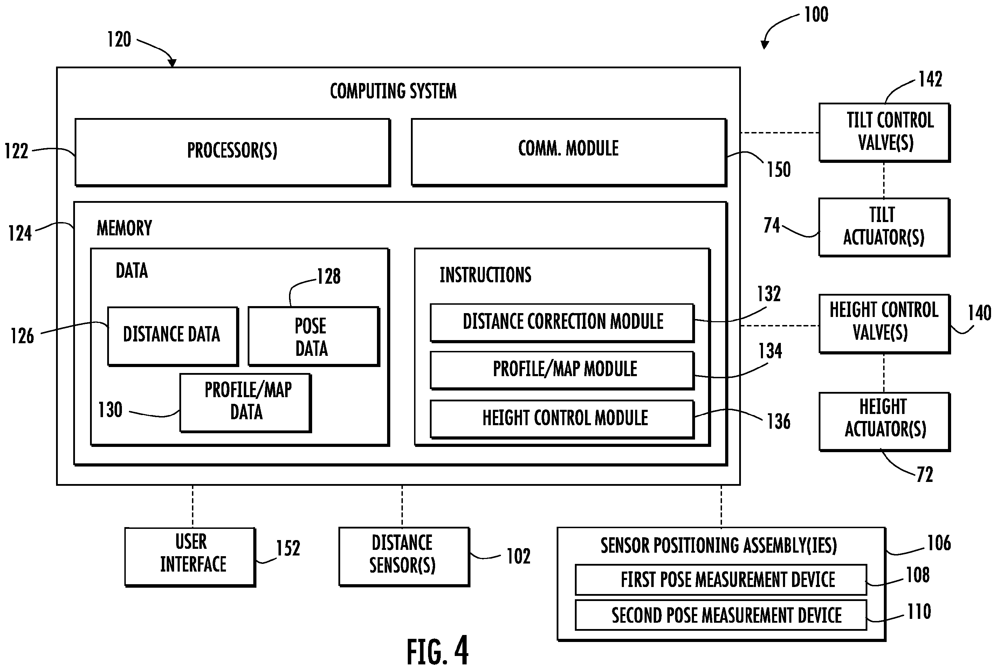

Moreover, as shown in FIG. 1, the harvester 10 may also include a sensor positioning assembly 106 for generating pose data associated with both an absolute pose and a relative pose of the distance sensor(s) 102. Specifically, in several embodiments, the sensor positioning assembly 106 may include both a first pose measurement device 108 (FIG. 4) for generating pose data associated with an absolute pose of the distance sensor(s) 102 relative to a world coordinate system and a second pose measurement device 110 (FIG. 4) for generating pose data associated with a relative pose of the distance sensor(s) 102. In one embodiment, the pose data may include data associated with both a position of the distance sensor(s) 102 and an angular orientation of the distance sensor(s) 102 (e.g., orientation data providing the angular orientation of the distance sensor(s) 102 relative to one or more axes, such as a pitch angle, a roll angle, and/or a tilt angle of the sensor(s) 102).

As will be described below, the pose data provided by the sensor positioning assembly 106 may be used to calculate a distance compensation value that can be applied to the distance measurements provided by the distance sensor(s) 102 to generate a more accurate profile/map of the ground surface 19. Specifically, since the distance sensor(s) 102 is supported on the header 32 in the illustrated embodiment, the sensor(s) 102 moves relative to the ground surface 19 with movement of the header 32 relative to the chassis 14 (e.g., via operation of the lift/tilt actuators 72, 74) and with movement of the header 32 with the chassis 14 (e.g., when the chassis 14 shifts up/down as the wheels 16, 18 encounter terrain variations along the ground surface 19). As a result, with such movement of the distance sensor(s) 102, variations in the distance 104 detected by the sensor(s) 102 are not necessarily due to variations in the ground profile itself, but rather due simply to changes in the position/pose of the sensor(s) 102 relative to the ground surface 19. Accordingly, the pose data provided by the sensor positioning assembly 106 may be used to correct the distance data to compensate for movement of the distance sensor(s) 102 within a world or global frame of reference, thereby providing compensated distance data that is indicative of an absolute profile of the ground surface 19. The estimated ground profile (e.g., as determined via the compensated distance data) may then, for example, be used to actively control the header height, such as by implementing a closed-loop control algorithm.

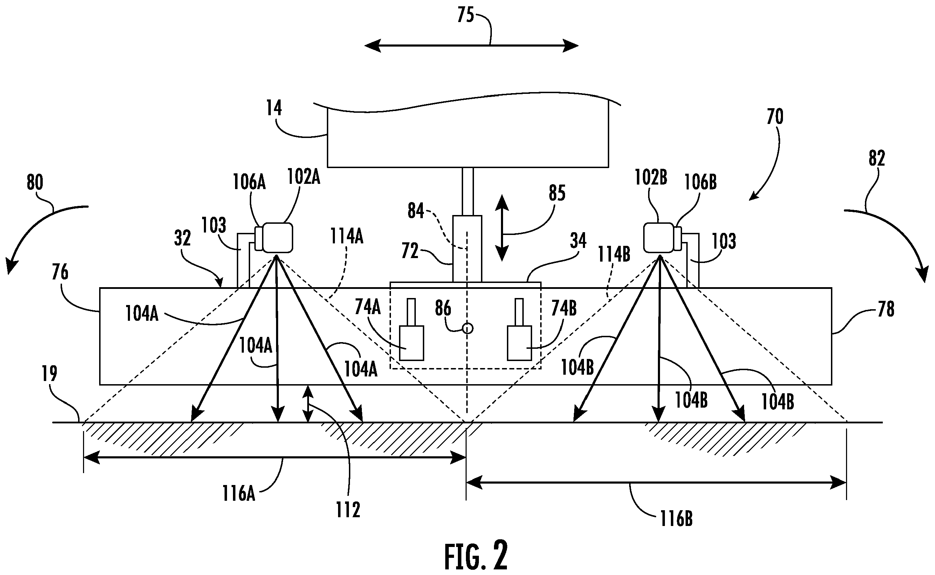

Referring now to FIG. 2, a simplified, schematic view of one embodiment of the header 32, the hydraulic system 70, and the sensor-related components described above with reference to FIG. 1 is illustrated in accordance with aspects of the present subject matter. As shown, the header 32 may generally extend side-to-side or in a lateral direction (indicated by arrow 75 in FIG. 2) between a first lateral end 76 and a second lateral end 78. Additionally, the header 32 may be pivotably coupled to the feeder 34 at a location between its first and second lateral ends 76, 78 to allow the header 32 to tilt laterally relative to the feeder 34 (e.g., in the tilt directions indicated by arrows 80, 82 in FIG. 2). In one embodiment, the header 32 may be coupled to the feeder 34 roughly at a lateral centerline 84 defined between the opposed lateral ends 76, 78 of the header 32. In such an embodiment, the height actuator 72 may, for instance, be configured to raise and lower the end of the feeder 34 relative to the frame 14 of the harvester, thereby adjusting the vertical positioning of the header 32 along the lateral centerline 84 (e.g., in the vertical direction indicated by arrow 85). Additionally, the lateral tilt actuator(s) 74 may be configured to laterally tilt the header 32 relative to the ground 19 (e.g., as indicated by arrows 80, 82) about a tilt axis 86 aligned with the lateral centerline 84 of the header 32.

In one embodiment, the hydraulic system 70 may include a pair of tilt actuators 74. For instance, as shown in FIG. 2, a first tilt actuator 74A may be coupled between the header 32 and the feeder 34 along one lateral side of the connection between the header 32 and the feeder 34, and a second tilt actuator 74B may be coupled between the header 32 and the feeder 34 along the opposed lateral side of the connection between the header 32 and the feeder 34. In such an embodiment, the tilt actuators 74A, 74B may be extended and retracted to pivot or tilt the header 32 about the tilt axis 86 of the header 32. However, in other embodiments, the hydraulic system 70 may only include a single tilt actuator 74, such as an actuator coupled between the header 32 and the feeder 34 in the lateral direction 75 across the centerline 84 of the header 32 at a position vertically above or below the tilt axis 86.

In general, the operation of the height actuator 72 and tilt actuator(s) 74 may be controlled (e.g., via an associated controller or computing system) to adjust the vertical positioning and tilt angle of the header 32 relative to the ground surface 19. For instance, as indicated above, one or more distance sensors 102 may be supported on the header 32 to generate distance data associated with the distance 104 defined between the sensor(s) 102 and the ground surface 19, which may, in turn, be indicative of a corresponding distance 112 between the header 32 and the ground surface 19 at each measurement location (only one distance 112 being labeled in FIG. 2. As shown in FIG. 2, the header 32 includes two distance sensors 102 supported thereon for generating distance data, such as by including a first distance sensor 102A positioned centrally within a first lateral half of the header32 and a second distance sensor 102B positioned centrally within a second lateral half of the header 32. However, in other embodiments, any other suitable number of distance sensors 102 may be installed relative to the header 32 to provide an indication of the height defined between the header 32 and the ground surface 19, including one or more sensors 102 installed at any other suitable location on the harvester 10.

As indicated above with reference to FIG. 1, the distance sensors 102 may be configured to generate distance data indicative of the distance 104 defined between the sensor 102 and the ground surface 19 at one or more locations forward or in front of the header 32 relative to the forward travel direction 21 of the header 32. In one embodiment, the distance sensors 102 may be configured to have a field of view 114 that spans across a given lateral width 116 of the field in the lateral direction 75. For instance, as shown in FIG. 2, the first distance sensor 102A has a field of view 114A spanning a first lateral width 116A, thereby allowing such sensor 102A to generate distance data at a plurality of different locations (e.g., distances 104A) along a plane (or multiple planes) extending in the lateral direction 75 along the first lateral width 116A. Similarly, the second distance sensor 102B has a field of view 114B spanning a second lateral width 116B, thereby allowing such sensor 102B to generate distance data at a plurality of different locations (e.g., distances 104B) along a plane (or multiple planes) extending in the lateral direction 75 along the second lateral width 116B. As shown in FIG. 2, the fields of view 114A, 114B of the sensors 102A, 102B extend from the lateral ends 76, 78 of the header 32 and o a location generally aligned with the center of the header 32, thereby allowing the sensors 102A, 102B to generate distance data across all or a substantial portion of the width of the header 32. As a result, the distance data provided by the sensors 102A, 102B (and as corrected based on the position/pose data provided by the associated sensor positioning assemblies 106) may be used to generate an estimated ground profile section of the ground surface 19 along the width of the header 32. By continuously generating such data, a continuous terrain map of the field may be created by combining all of the various estimated ground profiles section together

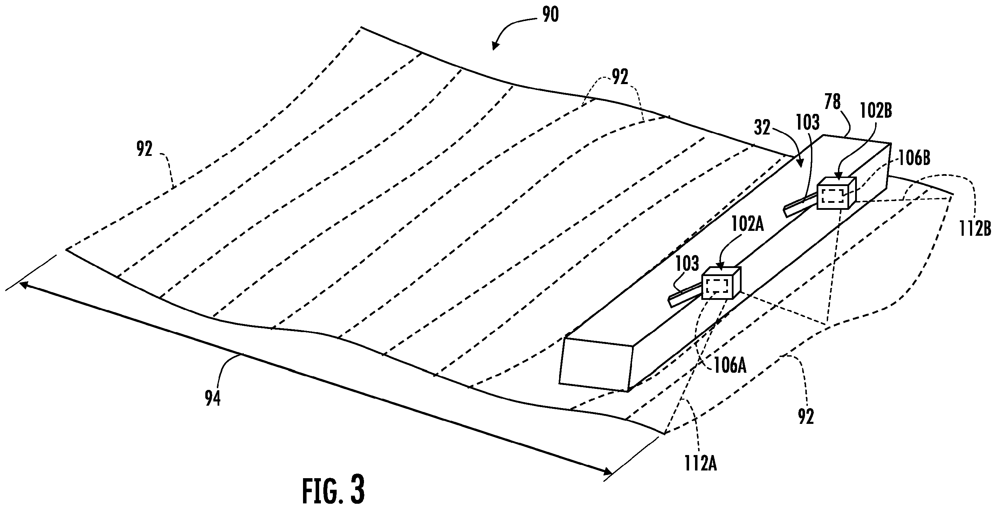

As described above with reference to FIG. 1, one or more sensor positioning assemblies 106 may also be provided to generate pose data associated with each distance sensor 102. For instance, as shown in FIG. 2, a first sensor positioning assembly 106A is located at or adjacent to the first distance sensor 102A, such as by being collocated or positioned side-by-side with the first distance sensor 102A (e.g., as shown in FIG. 2) or by being integrated within the distance sensor 102A (e.g., similar to the embodiment shown in FIG. 3). Additionally, a second sensor positioning assembly 106B is located at or adjacent to the second distance sensor 102B, such as by being collocated or positioned side-by-side with the first distance sensor 102B (e.g., as shown in FIG. 2) or by being integrated within the distance sensor 102B (e.g., similar to the embodiment shown in FIG. 3). Each sensor positioning assembly 106A, 106B is generally configured to generate pose data associated with the position/orientation of its respective distance sensor 102A, 102B, thereby allowing the distance data generated by each of such sensors 102A, 102B to be corrected to account for movement of the sensors 102A, 102B relative to the ground surface 19 (as will be described below).

It should be appreciated that, in other embodiments, the sensor positioning assemblies 106 may, instead, be spaced apart or positioned distal relative to their respective distance sensors 102. In such embodiments, any changes in the pose detected by each sensor positioning assembly 106 at the installed location thereof may be correlated to the relative pose of the respective distance sensor 102 based on the known spacing/mounting relationship between such devices and the kinematics of the harvester 10. Additionally, in one embodiment, a single sensor positioning assembly 106 may be used to generate pose data for each of the distance sensors 102. In such an embodiment, any changes in the pose detected by such positioning assembly 106 at the installed location thereof may be correlated to the relative pose of each of the distance sensors 102 based on the known spacing/mounting relationship between such devices and the kinematics of the harvester 10.

Referring now to FIG. 3, another simplified, schematic view of one embodiment of the header 32 and the sensor-related components described above with reference to FIGS. 1 and 2 is illustrated in accordance with aspects of the present subject matter, particularly illustrating a representation of an example terrain map 90 that can be generated based on the distance measurements provided by the sensors 102A, 102B and as corrected based on the pose data provided by the associated sensor positioning assemblies 106A, 106B. As shown, the terrain map 90 may be generated by combining a plurality of estimated ground profile sections 92 deriving from the compensated distance data, with the number of ground profile sections 92 included within the map 90 varying as a function of the associated sampling rates of the sensors 102 and sensor positioning assemblies 106.

In one embodiment, the terrain map 90 generated in accordance with aspects of the present subject matter may be continuously stored within an associated controller or computing system (described below with reference to FIG. 4) to provide a comprehensive terrain map of the entire field. Alternatively, the terrain map 90 may only be temporarily stored within the memory of the associated computing system across a distance 94 corresponding to the longitudinal distance between the sensors 102 and the rear axle or rear wheels 18 (FIG. 1) of the harvester 10. For instance, when using the terrain map 90 as a basis for closed-loop control of the header height, variations in the ground terrain will result in movement of the header 32 (and, thus, movement of the sensors 102) as the front and rear wheels 16, 18 encounter such terrain variations. As such, by temporarily storing a section of the terrain map 90 associated with the absolute ground profile between the sensors 102 and rear wheels 18, such data may be used to generate control outputs for controlling the operation of the height actuator 72 and/or the tilt actuator 74 based on anticipated movements of the header 32 (and, thus, the sensors 102) as each pair of wheels 16, 18 encounters terrain variations.

Referring now to FIG. 4, a schematic view of one embodiment of a control system 100 for automatically controlling the height of a harvesting implement (such as the header 32 of the harvester 10 described above) relative to the ground surface is illustrated in accordance with aspects of the present subject matter. In general, the control system 100 will be described herein with reference to the harvester 10 and header 32 illustrated in FIGS. 1-3. However, it should be appreciated that the disclosed control system 100 may be used to control the height of any suitable harvesting implement having any suitable implement configuration in association with any suitable agricultural work vehicle having any other suitable vehicle configuration.

As shown, the control system 100 may include any combination of components of the harvester 10 and header 32 described above with reference to FIGS. 1-3. For instance, the system 100 may include height and tilt actuators 72, 74 for adjusting the position of the header 32 relative to the ground surface 19, along with associated height and tilt control valves 140, 142 for controlling the operation of such actuators 72, 74. As shown, the system 100 also includes one or more distance sensors 102 configured to be installed or supported on the header 32. As indicated above, the distance sensor(s) 102 may be configured to generate data associated with the distance 104 (FIG. 1) defined between the sensor(s) 102 and the ground surface 19.

Additionally, as shown in FIG. 4, the control system 100 includes one or more sensor positioning assemblies 106 configured to generate pose data associated with the position/orientation of the distance sensor(s) 102. As indicated above, each sensor positioning assembly 106 may, in several embodiments, include both a first pose measurement device 108 and a second pose measurement device 110. In general, the first pose measurement device 108 may correspond to any suitable sensing device or assembly that is configured to generate data indicative or associated with an absolute pose of the distance sensor(s) 102 (e.g., with reference to a real-world coordinate system). For instance, in one embodiment, the first pose measurement device 108 may correspond to a satellite-based positioning device (also referred to as global navigation satellite system (GNSS)), such as a real-time kinematic (RTK) global positioning system (GPS) device. As is generally understood, RTK-GPS devices are capable of providing extremely accurate pose data (e.g., up to +/- 1 centimeter accuracy) within a global or real-world reference system, including both absolute position data and absolute orientation data. Additionally, the second pose measurement device 110 may generally correspond to any suitable sensing device or assembly that is configured to generate data indicative or associated with the relative pose of the distance sensor(s) 102 (e.g., data associated with the relative position and angular orientation of the distance sensor(s) 102). For instance, in one embodiment, the second pose measurement device 110 may correspond to an inertial measurement unit (IMU) including a combination of one or more gyroscopes, accelerometers, and/or magnetometers to measure, for example, absolute linear accelerations in three dimensions (e.g., via the 3-axis accelerometer(s)), absolute rotational velocities in three dimensions (e.g., roll, pitch, and yaw data via the 3-axis gyroscope(s)), and absolute orientation in two directions (e.g., roll and pitch). The absolute measurement signals from the IMU may then be numerically integrated to estimate the relative pose of the distance sensor(s) 102. In another embodiment, the second pose measurement device 110 may correspond to any other suitable device or assembly that is configured to generate data indicative or associated with the relative pose of the distance sensor(s) 102, such as one or more inclinometers and/or potentiometers.

By using the combination of and the first and second pose measurement devices 108, 110, a more accurate estimate of the pose of the distance sensor(s) 102 may be provided relative to a global reference frame. For example, while the first pose measurement device 108 (e.g., a satellite-based positioning device) is equipped to provide accurate pose data over time, the low frequency pose data generated by such device 108 is often not capable of accurately detecting quick changes in the pose of the distance sensor(s) 102. Similarly, while the second pose measurement device 110 (e.g., an IMU) is equipped to detect quick changes in the pose of the distance sensor(s) 102, such high frequency pose data will often drift over time. Thus, by combining the pose data provided by both measurement devices 108 110, a highly accurate estimate of the pose of the distance sensor(s) 102 relative to a global reference frame can be provided. In several embodiments, the data generated by the measurement devices 108, 110 may be combined via sensor fusion to provide an accurate estimate of the current pose of the distance sensor(s) 102 (e.g., including a current absolute position of the distance sensor(s) 102 and a current angular orientation of the distance sensor(s) 102. For instance, in one embodiment, the current pose of the distance sensor(s) 102 may be calculated as a weighted sum of a low-pass filtered value of the absolute pose estimate determined via the first pose measurement device 108 and a high-pass filtered value of the relative pose estimate determined via the second pose measurement device 110.

Referring still to FIG. 4, the control system 100 may also include a computing system 120 installed on and/or otherwise provided in operative association with the harvester 10. In general, the computing system 120 may correspond to any suitable processor-based device(s), such as a computing device or any combination of computing devices. Thus, in several embodiments, the computing system 120 may include one or more processor(s) 122 and associated memory device(s) 124 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 124 of the computing system 120 may generally comprise memory element(s) including, but not limited to, computer readable medium (e.g., random access memory (RAM)), computer readable non-volatile medium (e.g., a flash memory), a compact disc-read only memory (CD-ROM), a magneto-optical disk (MOD), a digital versatile disc (DVD) and/or other suitable memory elements. Such memory device(s) 124 may generally be configured to store suitable computer-readable instructions that, when implemented by the processor(s) 122, configure the computing system 120 to perform various computer-implemented functions, such as one or more aspects of the control algorithms and/or methods described herein.

In one embodiment, the memory 124 of the computing system 120 may include one or more databases for storing information associated with the operation of the harvester 10, including data associated with controlling the height of the header 32. For instance, as shown in FIG. 4, the memory 124 may include a distance database 126 storing data associated with distance measurements provided by the distance sensor(s) 102. Specifically, the computing system 120 may be commutatively coupled to each distance sensor 102 to allow the distance-related data generated by the sensor 102 to be transmitted to the computing system 120. As such, the computing system 120 may be configured to continuously monitor and stored the distance 104 (FIG. 1) detected between each distance sensor 102 and the ground surface 19.

Additionally, the memory 124 may include a pose database 126 for storing data associated with the pose data provided by each sensor positioning assembly 106, including initial pose data provided by each of the pose measurement devices 108, 110 and final pose data for each distance sensor(s) 102 as determined based on the initial pose data. Specifically, the computing system 120 may be commutatively coupled to both the first pose measurement device 108 and the second pose measurement device 110 of each sensor positioning assembly 106 to allow the pose-related data generated by such devices 108, 110 to be transmitted to the computing system 120. As such, the computing system 120 may be configured to continuously determine/monitor the pose of each distance sensor 102 to allow the computing system 120 to detect changes in the absolute position and/or angular orientation of such sensor 102.

Moreover, as shown in FIG. 4, the memory 124 of the computing system 120 may also include a profile/map database 130 storing data associated with the estimated ground profile sections and/or terrain map generated by the computing system 120. For instance, as will be described below, the computing system 120 may be configured to generate estimated ground profile sections and/or a terrain map based on the distance measurements provided by each distance sensor(s) 102 (and as corrected via the pose data provided by each sensor positioning assembly 106). Such ground profile sections and/or terrain map may then be stored within the database 130 for subsequent use and/or analysis.

Referring still to FIG. 4, in several embodiments, the memory 124 of the computing system 120 may store instructions that, when executed by the processor(s) 122, configure the computing system 120 to execute a distance correction module 132 for adjusting or correcting the distance measurements provided by the distance sensor(s) 102 to compensate for movement of the sensor(s) 102 relative to the world frame of reference Specifically, in several embodiments, the distance correction module 132 may be configured to calculate a compensation value for adjusting the initial distance measurements or values deriving from the distance sensor(s) 102 based on the pose-related data provided by the associated sensor positioning assembly 106. For instance, the distance correction module 132 may be configured to analyze the data from the sensor positioning assembly 106 to detect changes in the pose of the distance sensor(s) 102. The module 132 may then be configured to calculate an appropriate compensation value based on the detected change in the pose of the distance sensor(s) 102.

For instance, if the distance correction module 132 determines that the absolute position of the distance sensor(s) 102 has increased six inches (6") from a baseline sensor position set for such sensor(s) 102, a corresponding compensation value of negative 6 inches (-6") may be used to adjust the distance measurement provided by the distance sensor(s) 102 (e.g., by subtracting six inches from the distance measurement) to account for such an increase in the vertical height of the sensor(s) 102. Similarly, if the distance correction module 132 determines that the absolute position of the distance sensor(s) 102 has decreased 4 inches (4") from the baseline sensor position set for the sensor(s) 102, a corresponding compensation value of positive 4 inches (+4") may be used to adjust the distance measurement provided by the distance sensor(s) 102 (e.g., by adding four inches to the distance measurement) to account for such a decrease in the vertical height of the sensor(s) 102.

Additionally, if the distance correction module 132 determines that the angular orientation of the distance sensor(s) 102 has changed relative to a baseline angular orientation set for the distance sensor(s) 102, a corresponding compensation value may be selected to adjust the distance measurement provided by the distance sensor(s) 102 to account for such a change in angular orientation of the sensor(s) 102. For instance, in one embodiment, one or more look-up tables or mathematical expressions may be developed and stored within the memory 124 of the computing system 120 that correlate distance-related compensation values to changes in the pitch angle, roll angle, and/or tilt angle of the distance sensor(s) 102 relative to the baseline angular orientation set for the sensor(s) 102. In such an embodiment, when it is determined that the angular orientation of the distance sensor(s) 102 has changed relative to the baseline angular orientation along one or more axes, the look-up table(s) and/or mathematical expression(s) may be used to select an appropriate compensation value for correcting the distance measurement provided by the distance sensor(s) 102.

It should be appreciated that the look-up table(s) or mathematical expression(s) used to correlate distance-related compensation values to changes in the angular orientation of the distance sensor(s) 102 may be developed experimentally or may be developed mathematically and/or via modeling. It should also be appreciated that, in one embodiment, a suitable look-up table(s) or mathematical expression(s) may be developed that correlates distance-related compensation values to changes in both the angular orientation and absolute position of the distance sensor(s) 102. Alternatively, individual compensation values accounting for changes in the angular orientation and absolute position of the distance sensor(s) 102 may be calculated separately and subsequently combined (e.g., by summing the compensation values) to determine a final compensation value for adjusting the initial distance measurement provided via the distance sensor(s) 102.

Moreover, it should be appreciated that, in addition to compensating the measured distance provided by the distance sensor(s) 102, the computing system 120 may also be configured to compensate or correct the coordinates of the location at which the distance sensor(s) 102 is sensing the ground profile. For instance, changes in the angular orientation of the distance sensor(s) 102 may result in the sensor(s) 102 detecting the ground at a location further out in front of or closer towards the header 32. As such, the computing system 120 may be configured to take into account changes in the pose of the distance sensor(s) 102 when determining the location at which the ground is being sensed relative to a known reference point (e.g., a known reference point on the harvester 10, such as the front axle, or a known reference point on the header 32).

Referring still to FIG. 4, the memory 124 of the computing system 120 may store instructions that, when executed by the processor(s) 122, configure the computing system 120 to execute a profile/map module 134 for generating ground profile sections and/or terrain maps based on the compensated distance values provided via the distance correction module 132. Specifically, by correcting or adjusting the distance measurements provided by the distance sensor(s) 102 to compensate for changes in the pose of the sensor(s) 102, an absolute profile of the ground surface may be determined or calculated relative to the baseline sensor position/orientation. For instance, referring briefly back to FIG. 2, by calculating compensated distance values for each of the various distance measurements provided across the lateral width 116 of the field of view 114 of each distance sensor(s) 102, an absolute ground profile section may be determined across the lateral detection plane(s) of the sensor(s) 102. Additionally, referring briefly back to FIG. 3, successively determined ground profile sections (e.g., profile sections 92 of FIG. 3) may be combined together to form a terrain map of the field (e.g., map 90 of FIG. 3), which may then be stored within the memory 124 of the computing system 120 for subsequent processing and/or analysis.

Moreover, as shown in FIG. 4, the memory 124 of the computing system 120 may also store instructions that, when executed by the processor(s) 122, configure the computing system 120 to execute a height control module 136 for controlling the operation of one or more components that regulate the height of the header 32 relative to the ground surface 19, such as the height actuator 72 and/or the tilt actuator(s) 74. For example, in embodiments in which the actuators 72, 74 correspond to fluid-driven actuators, the computing system 120 may be communicatively coupled to one or more control valve(s) 140, 142 configured to regulate the supply of fluid (e.g., hydraulic fluid or air) to each actuator. Specifically, as shown in FIG. 4, the computing system 120 may be coupled to one or more height control valves 140 for regulating the supply of fluid to the height actuator 72 and one or more tilt control valves 142 for regulating the supply of fluid to the tilt actuator(s) 74. In such an embodiment, the height control module 136 may be configured to control the operation of each actuator 72, 74 by controlling the operation of its respective control valve(s) 140, 142. For instance, the height control module 136 may be configured to transmit suitable control outputs (e.g., current commands) to each control valve 140, 142 to adjust its associated valve position, thereby allowing the height control module 136 to vary the supply of fluid to the corresponding actuator(s) 72, 74 and, thus, automatically control the retraction/extension of such actuator(s) 72, 74. Alternatively, in embodiments in which the actuators 72, 74 correspond to electric-driven actuators (e.g., solenoid actuated cylinders), the height control module 136 may be configured to transmit suitable control outputs (e.g., current commands) to each associated solenoid to automatically control the retraction/extension of the respective actuator(s) 72, 74.

In accordance with aspects of the present subject matter, the height control module 136 may be configured to control the operation of the height actuator 72 and/or the tilt actuator 74 to maintain the height of the header 32 at a desired or predetermined height setting value(s), such as an operator selected target height or target height range. In doing so, the height control module 136 may, in several embodiments, be configured to execute a closed-loop control algorithm for generating control outputs for controlling the operation of the height actuator 72 and/or the tilt actuator 74 via the associated control valve(s) 140, 142. For instance, as will be described below, the computing system 120 may be configured to execute feedback control to maintain the height of the header 32 at the target height setting.

It should be appreciated that the computing system 120 may also include various other suitable components, such as a communications circuit or module 150, a network interface, one or more input/output channels, a data/control bus and/or the like, to allow the computing system 120 to be communicatively coupled with any of the various other system components described herein.

Moreover, as shown in the illustrated embodiment, the computing system 120 may also be communicatively coupled to a user interface 152 of the harvester 10. In general, the user interface 152 may correspond to any suitable input device(s) configured to allow the operator to provide operator inputs to the computing system 120, such as a touch screen display, a keyboard, joystick, buttons, knobs, switches, and/or combinations thereof located within the cab 22 of the harvester 10. The operator may provide various inputs into the system 100 via the user interface 152. In one embodiment, suitable operator inputs may include, but are not limited to, a target height for the header 32, a target height range for the header 32, and/or any other parameter associated with controlling the height of the header 32. In addition, the user interface 152 may also be configured to provide feedback (e.g., feedback associated with an operator selected target height and/or height range of the header 32) to the operator. As such, the user interface 152 may include one or more output devices (not shown), such as display screens, speakers, warning lights, and/or the like, which are configured to provide feedback from the computing system 120 to the operator.

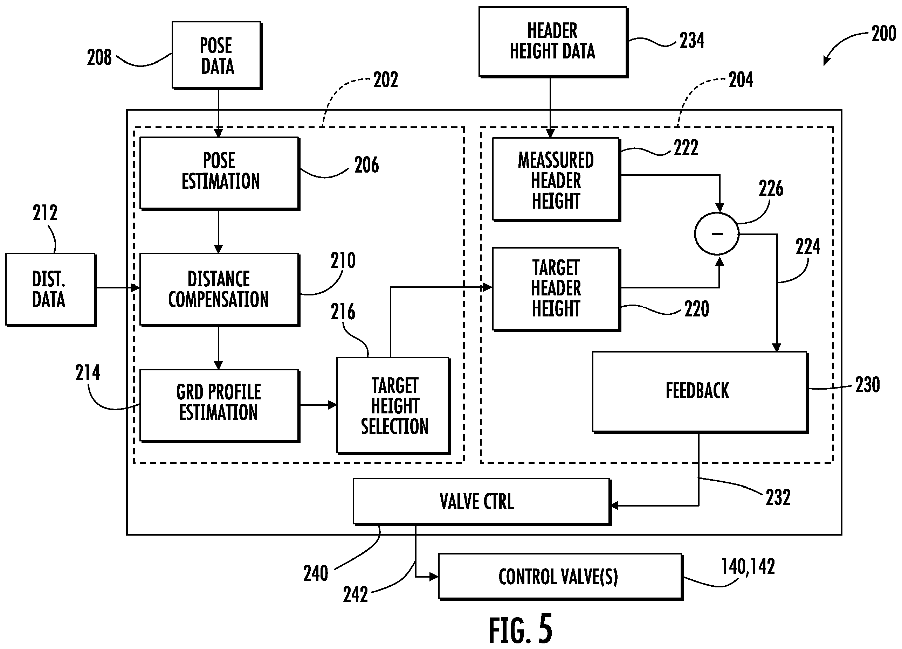

Referring now to FIG. 5, a flow diagram of one embodiment of control logic 200 that may be implemented by the computing system 120 (FIG. 4) for maintaining the height of a header 32 at a target height setting is illustrated in accordance with aspects of the present subject matter. In several embodiments, the control logic 200 may employ a cascade-type control methodology in which the output of a first controller (indicated by dashed box 202 in FIG. 5) provides the setpoint for a second controller (indicated by dashed box 204 in FIG. 5). For instance, in one embodiment, the first controller 202 of the computing system 202 may be configured to determine or select a target height setting for the header 32 based on the estimate ground profile determined via the compensated distance data. The target height setting may then be input into the second controller 204 to allow for error-based, feedback control signals to be generated by the computing system 120 for controlling the control valves 140, 142 and the corresponding actuators 72, 74 of the vehicle's hydraulic system, which, in turn, allows for precise and accurate height control of the header 32.

As shown in FIG. 5, the first controller 202 may, at (206), be configured to initially estimate the current pose of the distance sensor(s) 102 (e.g., the absolute position and orientation of the sensor(s) 102) based on the pose data received from the associated sensor positioning assembly 106 (e.g., as indicated by box 208). The estimated sensor pose can then be used, at (210), to compensate the distance measurements provided by the distance sensor(s) 102. For instance, the first controller 202 may be configured to determine a compensation value based on the currently estimated pose of the distance sensor(s) 102 (including changes in the pose of the sensor(s) 102), which can then be used to correct the initial distance measurements (e.g., as indicated by box 212). As described above, the corrected or compensated distance values may then, at (214) be used to estimate an absolute ground profile of the ground surface.

Additionally, as shown in FIG. 5, the first controller may, at (216), be configured to select a target height setting for the header 32 based on the estimated ground profile determined using the compensated distance values. In several embodiments, the target height setting may be selected based on a number of factors, including, for example, the ground profile at or adjacent to the header 32, the ground profile at or adjacent to the front wheels 16 of the harvester 10, the ground profile at or adjacent to the rear wheels 18 of the harvester 10, kinematics information associated with the harvester 10, and/or the like. For instance, as indicated above, a terrain map may be generated that charts the absolute ground profile over a given longitudinal distance, such as the distance 94 (FIG. 3) between the sensor(s) 102 and the rear axle or wheels 18 of the harvester 10. In such an embodiment, the terrain map (and/or related ground profile data), along with the kinematics information, may be used to select or calculate a target height setting for the header 32. For instance, the target height setting selected or calculated by the first controller 102 may, for example, take into account the anticipated movement of the header 32 (and, thus, the distance sensor(s) 102) due to kinematics of the harvester 10 as the wheels 16, 18 rise/fall when encountering changes in elevation of the terrain

Additionally, as indicated above, the target height setting selected by the first controller 202 may be input as a setpoint (e.g., as indicated by box 220) into the second controller 204 of the computing system 120, which may be configured to generate an error-based feedback control output for controlling the operation of the control valve(s) 140, 142. Specifically, in several embodiments, the second controller 204 may be configured to determine the error between target height setting and a measured height of the header 32, which may then be used to calculate a speed at which the header 32 needs to be made in order to maintain the header 32 at the target height setting relative to the ground surface 19. Thus, as shown in FIG. 4, the second controller 204 may be configured to receive two input signals, namely the target header height signal 220 and a measured header height signal 222, and, based on such input signals 220, 222, generate a corresponding difference or error signal 224 (e.g., via the difference block 226). The error signal 224 may then be input into a feedback function block 230 to generate an output signal 232 that is associated with the calculated rate of change or speed at which the header 32 should be made to maintain the header 32 at the target height setting.

It should be appreciated that the measured header height signal 222 may, in several embodiments, generally derive from any suitable header height data (e.g., as indicated by box 234). For instance, in several embodiments, a separate set of contact-based sensors (e.g., mechanical feelers) may be supported on the header 32 for providing data associated with the current header height relative to the ground surface 19. In such embodiments, the header height data 234 may correspond to or derive from the data provided by the contact-based sensors. In another embodiment, the header height data 234 may derive from the compensated distance values generated by the computing system 120. For instance, with the distance sensor(s) 102 mounted at a known location relative to the header 32 (including a known vertical offset from the bottom of the header 32), the actual header height relative to the ground surface 19 at each location across the lateral width of the header 32 may be calculated by subtracting the vertical offset distance defined between the bottom of the header 32 and the distance sensor(s) 102 from the corresponding compensated distance values.

Referring still to FIG. 5, the output signal 232 generated by the feedback function block 230 may then be input into a valve control block 240 configured to generate valve control commands 242 for controlling the operation of the height control valve(s) 140 and/or the tilt control valve(s) 142. Specifically, in several embodiments, the speed value associated with the output signal 232 may be converted into a suitable valve control command(s) 242 that may be transmitted to the control valve(s) 140, 142 in order to control the operation of the valve(s) 140, 142 in a manner that causes the header 32 to be maintained at the target height setting relative to the ground surface 19.

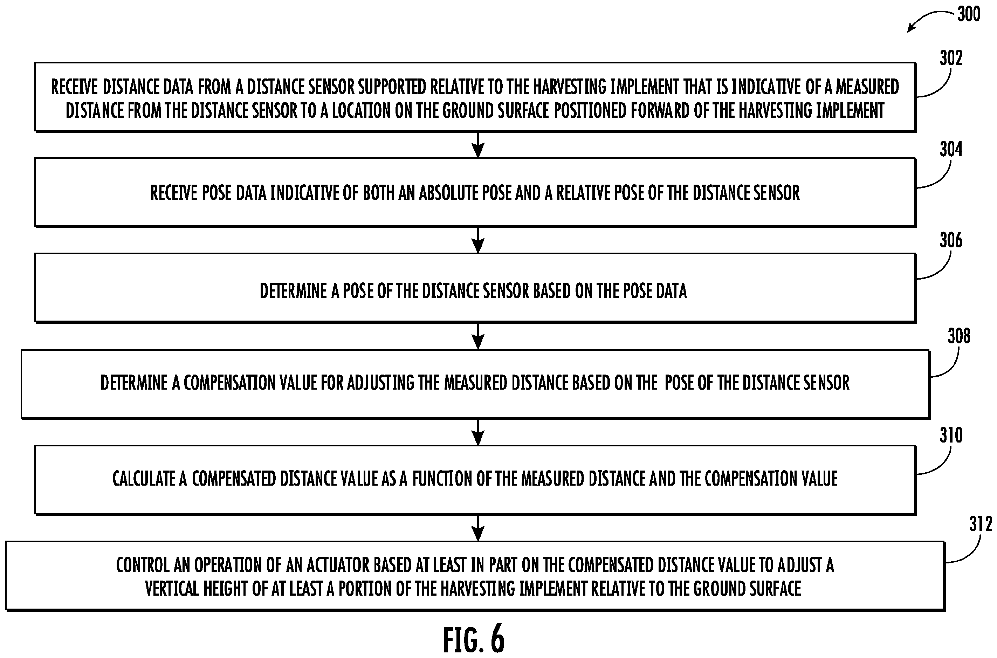

Referring now to FIG. 6, a flow diagram of one embodiment of a method 300 for automatically controlling a height of a harvesting implement relative to a ground surface is illustrated in accordance with aspects of the present subject matter. For purposes of discussion, the method 300 will generally be described herein with reference to the header 32 shown in FIGS. 1-3 and the system 100 shown in FIG. 4. However, it should be appreciated that the disclosed method 300 may be executed to control the height of any suitable harvesting implement having any other suitable implement configuration and/or in association with any suitable system having any other suitable system configuration. Additionally, although FIG. 6 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 6, at (302) the method 300 includes receiving distance data from a distance sensor supported relative to the harvesting implement that is indicative of a measured distance from the distance sensor to a location on the ground surface positioned forward of the harvesting implement. For instance, as indicated above, the computing system 120 may be communicatively coupled to one or more distance sensors 102 configured to detect or measure the distance defined between the sensor(s) 102 and the ground surface. In such an embodiment, the computing system 120 may be configured to receive the distance data from the sensor(s) 102 to allow the computing system 120 to continuously monitor such distance.

Additionally, at (304), the method 300 includes receiving pose data indicative of both an absolute pose and a relative pose of the distance sensor. Specifically, as indicated above, the computing system 120 may be communicatively coupled to a sensor positioning assembly 106 including a first pose measurement device 108 and a second pose measurement device 110. In such an embodiment, the computing system 120 may be configured to receive pose-related data from the first pose measurement device 108 that is indicative of the absolute pose of an associated distance sensor(s) 102 along with pose-related data from the second pose measurement device 110 that is indicative of the relative pose of such sensor(s) 102.

Moreover, at (306) and (308), the method 300 includes determining a pose of the distance sensor based on the pose data and determining a compensation value for adjusting the measured distance based on the pose of the distance sensor. For example, as indicated above, the computing system 120 may be configured to monitor the pose data received from the sensor positioning assembly 106 to detect changes in the absolute position and/or orientation of the distance sensor(s) 102. By detecting the change in the absolute position and/or orientation of the distance sensor(s) 102, the computing system 120 may then be configured to calculate a compensation value for adjusting the distance measurement(s) initially generated based on the distance data provided from the sensor(s) 102.

Referring still to FIG. 6, at (310), the method 300 includes calculating a compensated distance value as a function of the measured distance and the compensation value. For instance, as indicated above, the computing system 120 may be configured to add or subtract the compensation value to/from the measured distance value provided by the distance sensor(s) 102 (e.g., depending on whether the compensation value is positive or negative) to determine a compensated distance value that accounts for any changes in the position/pose of the distance sensor(s) 102 (e.g., due to header movement).

Additionally, at (312), the method 300 includes controlling an operation of an actuator based at least in part on the compensated distance value to adjust a vertical height of at least a portion of the harvesting implement relative to the ground surface. Specifically, as indicated above, the computing system 120 may be configured to control the operation of the height actuator 72 and/or the tilt actuator(s) 74 to adjust the vertical height of the header 32. For instance, in one embodiment, the computing system 120 may be configured to adjust the header height using a closed-loop control algorithm to maintain the header 32 at a predetermined target height setting (e.g., an operator-selected height setting).

It is to be understood that the steps of the method 300 are performed by the computing system 120 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 120 described herein, such as the method 300, is implemented in software code or instructions which are tangibly stored on a tangible computer readable medium. The computing system 120 loads the software code or instructions via a direct interface with the computer readable medium or via a wired and/or wireless network. Upon loading and executing such software code or instructions by the computing system 120, the computing system 120 may perform any of the functionality of the computing system 120 described herein, including any steps of the method 300 described herein.

## Claims

1. A height control system (100) for an agricultural vehicle (10), the system (100) including a harvesting implement (32), an actuator (72) configured to adjust a vertical height of at least a portion of the harvesting implement (32) relative to a ground surface, and a distance sensor (102) supported relative to the harvesting implement (32), the distance sensor (102) configured to generate distance data indicative of a distance from the distance sensor (102) to a location on the ground surface positioned forward of the harvesting implement (32), the system (100) being **characterized by**:
a sensor positioning assembly (106) comprising first and second pose measurement devices (108, 110), the first pose measurement device (108) configured to generate pose data indicative of an absolute pose of the distance sensor (102), the second pose measurement device (110) configured to generate pose data indicative of a relative pose of the distance sensor (102); and
a computing system (120) communicatively coupled to the distance sensor (102) and the sensor positioning assembly (106), the computing system (120) being configured to:
determine an initial distance value associated with the distance from the distance sensor (102) to the ground surface based on the distance data received from the distance sensor;
determine a pose of the distance sensor (102) based on the pose data received from the first and second pose measurement devices (108, 110);
determine a compensation value for adjusting the initial distance value based on the pose of the distance sensor (102);
calculate a compensated distance value as a function of the initial distance value and the compensation value; and
control an operation of the actuator (72) based at least in part on the compensated distance value to adjust the vertical height of the at least a portion of the harvesting implement (32) relative to the ground surface.

2. The height control system (100) of claim 1, wherein the computing system (120) is further configured to generate an estimated ground profile of the ground surface based at least in part on the compensated distance value.

3. The height control system (100) of claim 2, wherein the control of the operation of the actuator (72) is based at least in part on the estimated ground profile of the ground surface.

4. The height control system (100) of claim 2, wherein the computing system (120) is further configured to determine a target height setting for the harvesting implement (32) based at least in part on the estimated ground profile.

5. The height control system (100) of claim 4, wherein the computing system (120) is further configured to generate at least one control output for controlling the operation of the actuator (72) based at least in part on the target height setting for the harvesting implement (32).

6. The height control system (100) of claim 5, wherein:
the computing system (120) is configured to estimate a current vertical height of the harvesting implement (32) relative to the ground surface; and
the at least one control output is calculated as a function of a height error between the current vertical height of the harvesting implement (32) relative to the ground surface and the target height setting for the harvesting implement (32).

7. The height control system (100) of claim 2, wherein the estimated ground profile comprises one of a plurality of estimated ground profile sections generated by the computing system (120), the computing system being further configured to generate a terrain map based on the plurality of estimated ground profile sections.

8. The height control system (100) of claim 1, wherein the distance sensor (102) comprises a non-contact sensor, wherein the first pose measurement device (108) comprises a satellite-based positioning device and the second pose measurement device (110) comprises an inertial measurement unit.

9. The height control system (100) of claim 1, wherein the actuator (72) comprises at least one of a height actuator (72) configured to adjust a vertical position of the harvesting implement (32) relative to the ground surface or a tilt actuator (74) configured to adjust a tilt of the harvesting implement (32) relative to the ground surface.

10. A method (300) for automatically controlling a height of a harvesting implement (32) of an agricultural work vehicle (10) relative to a ground surface, the harvesting implement (32) being provided in operative association with an actuator (72) configured to adjust a vertical height of at least a portion of the harvesting implement (32) relative to the ground surface, the method (300) including receiving, with a computing system (120), distance data from a distance sensor (102) supported relative to the harvesting implement that is indicative of a measured distance from the distance sensor (102) to a location on the ground surface positioned forward of the harvesting implement (32), the method (300) being **characterized by**:
receiving, with the computing system (120), pose data indicative of both an absolute pose and a relative pose of the distance sensor (102);
determining, with the computing system (120), a pose of the distance sensor (102) based on the pose data;
determining, with the computing system (120), a compensation value for adjusting the measured distance based on the pose of the distance sensor (102);
calculating, with the computing system (120), a compensated distance value as a function of the measured distance and the compensation value; and
controlling, with the computing system (120), an operation of the actuator (72) based at least in part on the compensated distance value to adjust the vertical height of the at least a portion of the harvesting implement (32) relative to the ground surface.

11. The method (300) of claim 10, further comprising generating an estimated ground profile of the ground surface based at least in part on the compensated distance value.

12. The method (300) of claim 11, wherein controlling the operation of the actuator (72) comprises controlling the operation of the actuator (72) based at least in part on the estimated ground profile of the ground surface.

13. The method (300) of claim 11, further comprising determining a target height setting for the harvesting implement (32) based at least in part on the estimated ground profile.

14. The method (300) of claim 13, further comprising generating at least one control output for controlling the operation of the actuator (72) based at least in part on the target height setting for the harvesting implement.

15. The method (300) of claim 13, further comprising estimating a current vertical height of the harvesting implement (32) relative to the ground surface;
wherein generating the at least one control output comprises calculating the at least one control output as a function of a height error between the current vertical height of the harvesting implement (32) relative to the ground surface and the target height setting for the harvesting implement (32).

## Patentansprüche

1. Höhensteuersystem (100) für ein landwirtschaftliches Fahrzeug (10), wobei das System (100) eine Erntevorrichtung (32), einen Aktuator (72), der dazu eingerichtet ist, eine vertikale Höhe von zumindest einem Teil der Erntevorrichtung (32) relativ zu einer Bodenoberfläche einzustellen, und einen Abstandssensor (102), der relativ zu der Erntevorrichtung (32) getragen ist, aufweist, wobei der Abstandssensor (102) dazu eingerichtet ist, Abstandsdaten zu erzeugen, die eine Entfernung von dem Abstandssensor (102) zu einer auf der Bodenoberfläche angeordneten Position vor der Erntevorrichtung (32) anzeigen,
wobei das System (100) **gekennzeichnet ist durch**:
eine Sensorpositionierungsanordnung (106), die eine erste und eine zweite Lageerfassungseinrichtung (108, 110) umfasst, wobei die erste Lageerfassungseinrichtung (108) dazu eingerichtet ist, Lagedaten zu erzeugen, die eine absolute Lage des Abstandssensors (102) anzeigen, und wobei die zweite Lageerfassungseinrichtung (110) dazu eingerichtet ist, Lagedaten zu erzeugen, die eine relative Lage des Abstandssensors (102) angeben; und
ein Rechnersystem (120), das kommunikativ mit dem Abstandssensor (102) und der Sensorpositionierungsanordnung (106) gekoppelt ist, wobei das Rechnersystem (120) dazu eingerichtet ist:
einen initialen Abstandswert zu bestimmen, der mit der Entfernung von dem Abstandssensor (102) zu der Bodenoberfläche assoziiert ist, basierend auf den von dem Abstandssensor empfangenen Abstandsdaten;
eine Lage des Abstandssensors (102) basierend auf den von der ersten und der zweiten Lageerfassungseinrichtung (108, 110) empfangenen Lagedaten zu bestimmen;
einen Kompensationswert zur Anpassung des initialen Abstandswerts basierend auf der Lage des Abstandssensors (102) zu bestimmen;
einen kompensierten Abstandswert als Funktion des initialen Abstandswerts und des Kompensationswerts zu berechnen; und
einen Betrieb des Aktuators (72) zumindest teilweise basierend auf dem kompensierten Abstandswert zu steuern, um die vertikale Höhe des zumindest eines Teils der Erntevorrichtung (32) relativ zu der Bodenoberfläche einzustellen.

2. Höhensteuersystem (100) nach Anspruch 1, wobei das Rechnersystem (120) des Weiteren dazu eingerichtet ist, ein geschätztes Bodenprofil der Bodenoberfläche zumindest teilweise basierend auf dem kompensierten Abstandswert zu erzeugen.

3. Höhensteuersystem (100) nach Anspruch 2, wobei die Steuerung des Betriebs des Aktuators (72) zumindest teilweise basierend auf dem geschätzten Bodenprofil der Bodenoberfläche erfolgt.

4. Höhensteuersystem (100) nach Anspruch 2, wobei das Rechnersystem (120) des Weiteren dazu eingerichtet ist, eine Zielhöheneinstellung für die Erntevorrichtung (32) zumindest teilweise basierend auf dem geschätzten Bodenprofil zu bestimmen.

5. Höhensteuersystem (100) nach Anspruch 4, wobei das Rechnersystem (120) des Weiteren dazu eingerichtet ist, zumindest eine Steuerausgabe zur Steuerung des Betriebs des Aktuators (72) zumindest teilweise basierend auf der Zielhöheneinstellung für die Erntevorrichtung (32) zu erzeugen.

6. Höhensteuersystem (100) nach Anspruch 5, wobei:
das Rechnersystem (120) dazu eingerichtet ist, eine aktuelle vertikale Höhe der Erntevorrichtung (32) relativ zu der Bodenoberfläche zu schätzen; und
die zumindest eine Steuerausgabe als Funktion eines Höhenfehlers zwischen der aktuellen vertikalen Höhe der Erntevorrichtung (32) relativ zu der Bodenoberfläche und der Zielhöheneinstellung für die Erntevorrichtung (32) berechnet wird.

7. Höhensteuersystem (100) nach Anspruch 2, wobei das geschätzte Bodenprofil einen von einer Vielzahl geschätzter Bodenprofilabschnitte umfasst, die von dem Rechnersystem (120) erzeugt werden, wobei das Rechnersystem des Weiteren dazu eingerichtet ist, eine Geländekarte basierend auf der Vielzahl geschätzter Bodenprofilabschnitte zu erzeugen.

8. Höhensteuersystem (100) nach Anspruch 1, wobei der Abstandssensor (102) einen berührungslosen Sensor umfasst, wobei die erste Lageerfassungseinrichtung (108) eine satellitenbasierte Positionierungseinrichtung umfasst und die zweite Lageerfassungseinrichtung (110) eine Trägheitsmesseinheit umfasst.

9. Höhensteuersystem (100) nach Anspruch 1, wobei der Aktuator (72) zumindest einen Höhenaktuator (72), der dazu eingerichtet ist, eine vertikale Position der Erntevorrichtung (32) relativ zu der Bodenoberfläche einzustellen, oder einen Neigungsaktuator (74) umfasst, der dazu eingerichtet ist, eine Neigung der Erntevorrichtung (32) relativ zu der Bodenoberfläche einzustellen.

10. Verfahren (300) zum automatischen Steuern einer Höhe einer Erntevorrichtung (32) eines landwirtschaftlichen Arbeitsfahrzeugs (10) relativ zu einer Bodenoberfläche, wobei die Erntevorrichtung (32) in Wirkverbindung mit einem Aktuator (72) vorgesehen ist, der dazu eingerichtet ist, eine vertikale Höhe von zumindest einem Teil der Erntevorrichtung (32) relativ zu der Bodenoberfläche einzustellen, wobei das Verfahren (300) das Empfangen, mit einem Rechnersystem (120), von Abstandsdaten von einem Abstandssensor (102) umfasst, der relativ zu der Erntevorrichtung getragen ist und der Abstandsdaten erzeugt, die eine gemessene Entfernung von dem Abstandssensor (102) zu einer auf der Bodenoberfläche vor der Erntevorrichtung (32) angeordneten Position anzeigen,
wobei das Verfahren (300) **gekennzeichnet ist durch**:
Empfangen, mit dem Rechnersystem (120), von Lagedaten, die sowohl eine absolute Lage als auch eine relative Lage des Abstandssensors (102) anzeigen;
Bestimmen, mit dem Rechnersystem (120), einer Lage des Abstandssensors (102) basierend auf den Lagedaten;
Bestimmen, mit dem Rechnersystem (120), eines Kompensationswerts zur Anpassung der gemessenen Entfernung basierend auf der Lage des Abstandssensors (102);
Berechnen, mit dem Rechnersystem (120), eines kompensierten Abstandswerts als Funktion der gemessenen Entfernung und des Kompensationswerts; und
Steuern, mit dem Rechnersystem (120), eines Betriebs des Aktuators (72) zumindest teilweise basierend auf dem kompensierten Abstandswert, um die vertikale Höhe des zumindest eines Teils der Erntevorrichtung (32) relativ zu der Bodenoberfläche einzustellen.

11. Verfahren (300) nach Anspruch 10, das des Weiteren das Erzeugen eines geschätzten Bodenprofils der Bodenoberfläche zumindest teilweise basierend auf dem kompensierten Abstandswert aufweist.

12. Verfahren (300) nach Anspruch 11, wobei das Steuern des Betriebs des Aktuators (72) das Steuern des Betriebs des Aktuators (72) zumindest teilweise basierend auf dem geschätzten Bodenprofil der Bodenoberfläche umfasst.

13. Verfahren (300) nach Anspruch 11, das des Weiteren das Bestimmen einer Zielhöheneinstellung für die Erntevorrichtung (32) zumindest teilweise basierend auf dem geschätzten Bodenprofil aufweist.

14. Verfahren (300) nach Anspruch 13, das des Weiteren das Erzeugen zumindest einer Steuerausgabe zur Steuerung des Betriebs des Aktuators (72) zumindest teilweise basierend auf der Zielhöheneinstellung für die Erntevorrichtung (32) aufweist.

15. Verfahren (300) nach Anspruch 13, das des Weiteren das Schätzen einer aktuellen vertikalen Höhe der Erntevorrichtung (32) relativ zu der Bodenoberfläche aufweist;
wobei das Erzeugen der zumindest einen Steuerausgabe das Berechnen der zumindest einen Steuerausgabe als Funktion eines Höhenfehlers zwischen der aktuellen vertikalen Höhe der Erntevorrichtung (32) relativ zu der Bodenoberfläche und der Zielhöheneinstellung für die Erntevorrichtung (32) umfasst.

## Revendications

1. Un système de réglage de hauteur (100) pour un véhicule agricole (10), le système (100) comprenant un outil de récolte (32), un actionneur (72) configuré pour ajuster une hauteur verticale d'au moins une partie de l'outil de récolte (32) par rapport à une surface du sol, et un capteur de distance (102) soutenu par rapport à l'outil de récolte (32), le capteur de distance (102) étant configuré pour générer des données de distance indiquant une distance entre le capteur de distance (102) et un emplacement sur la surface du sol, positionné devant l'outil de récolte (32), le système (100) étant **caractérisé en ce qu'**il comprend :
un ensemble de positionnement du capteur (106) comprenant un premier et un second dispositifs de mesure de pose (108, 110), le premier dispositif de mesure de pose (108) étant configuré pour générer des données de pose indicatives d'une pose absolue du capteur de distance (102), le second dispositif de mesure de pose (110) étant configuré pour générer des données de pose indicatives d'une pose relative du capteur de distance (102) ; et
un système informatique (120) couplé de manière communicative au capteur de distance (102) et à l'ensemble de positionnement du capteur (106), le système informatique (120) étant configuré pour :
déterminer une valeur de distance initiale associée à la distance du capteur de distance (102) jusqu'à la surface du sol sur la base des données de distance reçues du capteur de distance ;
déterminer une pose du capteur de distance (102) sur la base des données de pose reçues des premier et second dispositifs de mesure de pose (108, 110) ;
déterminer une valeur de compensation pour ajuster la valeur de distance initiale sur la base de la pose du capteur de distance (102) ;
calculer une valeur de distance compensée en fonction de la valeur de distance initiale et de la valeur de compensation ; et
commander le fonctionnement de l'actionneur (72) sur la base, au moins en partie, de la valeur de distance compensée afin d'ajuster la hauteur verticale d'au moins une partie de l'outil de récolte (32) par rapport à la surface du sol.

2. Le système de réglage de hauteur (100) selon la revendication 1, dans lequel le système informatique (120) est en outre configuré pour générer un profil de sol estimé de la surface du sol sur la base, au moins en partie, de la valeur de distance compensée.

3. Le système de réglage de hauteur (100) selon la revendication 2, dans lequel la commande du fonctionnement de l'actionneur (72) est basée, au moins en partie, sur le profil de sol estimé de la surface du sol.

4. Le système de réglage de hauteur (100) selon la revendication 2, dans lequel le système informatique (120) est en outre configuré pour déterminer un réglage de hauteur cible pour l'outil de récolte (32) sur la base, au moins en partie, du profil de sol estimé.

5. Le système de réglage de hauteur (100) selon la revendication 4, dans lequel le système informatique (120) est en outre configuré pour générer au moins une sortie de commande pour commander le fonctionnement de l'actionneur (72) sur la base, au moins en partie, du réglage de hauteur cible pour l'outil de récolte (32).

6. Le système de réglage de hauteur (100) selon la revendication 5, dans lequel :
le système informatique (120) est configuré pour estimer une hauteur verticale actuelle de l'outil de récolte (32) par rapport à la surface du sol ; et
l'au moins une sortie de commande est calculée en fonction d'une erreur de hauteur entre la hauteur verticale actuelle de l'outil de récolte (32) par rapport à la surface du sol et le réglage de hauteur cible de l'outil de récolte (32).

7. Le système de réglage de hauteur (100) selon la revendication 2, dans lequel le profil de sol estimé comprend l'une d'une pluralité de sections de profil de sol estimé générées par le système informatique (120), le système informatique étant en outre configuré pour générer une carte topographique sur la base de la pluralité de sections de profil de sol estimé.

8. Le système de réglage de hauteur (100) selon la revendication 1, dans lequel le capteur de distance (102) comprend un capteur sans contact, dans lequel le premier dispositif de mesure de pose (108) comprend un dispositif de positionnement par satellite et le second dispositif de mesure de pose (110) comprend une unité de mesure inertielle.

9. Le système de réglage de hauteur (100) selon la revendication 1, dans lequel l'actionneur (72) comprend au moins l'un parmi un actionneur de hauteur (72) configuré pour ajuster une position verticale de l'outil de récolte (32) par rapport à la surface du sol et un actionneur d'inclinaison (74) configuré pour ajuster une inclinaison de l'outil de récolte (32) par rapport à la surface du sol.

10. Un procédé (300) pour commander automatiquement une hauteur d'un outil de récolte (32) d'un véhicule de travail agricole (10) par rapport à une surface du sol, l'outil de récolte (32) étant fourni en association fonctionnelle avec un actionneur (72) configuré pour ajuster une hauteur verticale d'au moins une partie de l'outil de récolte (32) par rapport à la surface du sol, le procédé (300) comprenant la réception, par un système informatique (120), de données de distance provenant d'un capteur de distance (102) soutenu par rapport à l'outil de récolte qui sont indicatives d'une distance mesurée du capteur de distance (102) jusqu'à un emplacement sur la surface du sol positionné devant l'outil de récolte (32), le procédé (300) étant **caractérisé en ce qu'**il comprend :
la réception, par le système informatique (120), de données de pose indicatives à la fois d'une pose absolue et d'une position relative du capteur de distance (102) ;
la détermination, par le système informatique (120, d'une pose du capteur de distance (102) sur la base des données de pose ;
la détermination, par le système informatique (120), d'une valeur de compensation pour ajuster la distance mesurée sur la base de la pose du capteur de distance (102) ;
le calcul, par le système informatique (120), d'une valeur de distance compensée en fonction de la distance mesurée et de la valeur de compensation ; et
la commande, par le système informatique (120), du fonctionnement de l'actionneur (72) sur la base, au moins en partie, de la valeur de distance compensée afin d'ajuster la hauteur verticale d'au moins une partie de l'outil de récolte (32) par rapport à la surface du sol.

11. Le procédé (300) selon la revendication 10, comprenant en outre la génération d'un profil de sol estimé de la surface du sol sur la base, au moins en partie, de la valeur de distance compensée.

12. Le procédé (300) selon la revendication 11, dans lequel la commande du fonctionnement de l'actionneur (72) comprend la commande du fonctionnement de l'actionneur (72) sur la base, au moins en partie, du profil de sol estimé de la surface du sol.

13. Le procédé (300) selon la revendication 11, comprenant en outre la détermination d'un réglage de hauteur cible pour l'outil de récolte (32) sur la base, au moins en partie, du profil de sol estimé.

14. Le procédé (300) selon la revendication 13, comprenant en outre la génération d'au moins une sortie de commande destinée à commander le fonctionnement de l'actionneur (72) sur la base, au moins en partie, du réglage de hauteur cible pour l'outil de récolte.

15. Le procédé (300) selon la revendication 13, comprenant en outre l'estimation d'une hauteur verticale actuelle de l'outil de récolte (32) par rapport à la surface du sol ;
dans lequel la génération de l'au moins une sortie de commande comprend le calcul de l'au moins une sortie de commande en fonction d'une erreur de hauteur entre la hauteur verticale actuelle de l'outil de récolte (32) par rapport à la surface du sol et le réglage de hauteur cible de l'outil de récolte (32).
